# EUROPEAN PATENT SPECIFICATION

(11) **EP 0 471 806 B1**
(45) Date of publication and mention of the grant of the patent: **24.04.1996**
(21) Application number: 91904280.4
(22) Date of filing: 22.02.1991
(51) Int. Cl.: G05B 19/042

(54) **METHOD OF PERSONALISING AN ELECTRONIC MODULE, ELECTRONIC CIRCUIT AND MODULE WHICH ARE DESIGNED FOR THE IMPLEMENTATION OF THIS METHOD**
VERFAHREN ZUR ANPASSUNG EINES ELEKTRONISCHEN MODULS, ELEKTRONISCHE SCHALTUNG UND MODUL, WELCHES ZUR IMPLEMENTIERUNG DIESES VERFAHRENS ENTWICKELT WURDE
PROCEDE DE PERSONNALISATION D'UN MODULE ELECTRONIQUE, ET CIRCUIT ELECTRONIQUE ET MODULE CONCUS POUR METTRE EN OEUVRE LE PROCEDE

(30) Priority: 07.03.1990 FR 9002857
(43) Date of publication of application: 26.02.1992
(73) Proprietor: SIEMENS AKTIENGESELLSCHAFT, D-80333 München (DE)
(72) Inventor: LONCLE, Jean-Pierre, F-31600 Muret (FR)
(86) International application number: EP9100333
(87) International publication number: WO9114213

(56) References cited:
- EP-A- 0 048 825
- EP-A- 0 333 057
- US-A- 4 349 695
- PATENT ABSTRACTS OF JAPAN vol. 10, no. 364 (P-524)(2421) 05 December 1986 & JP-A-61 160 107

## Description

The present invention relates to a method of personalising an electronic module, and to an electronic circuit and a module which are designed for the implementation of this method. More particularly, the present invention relates to such a method appropriate to the loading, into an electronic circuit included in the module, of an identifier and of other possible configuration data, this module forming part of an assembly of such modules placed on board an automotive vehicle and interconnected in a local network for multiplex data transmission.

It is currently envisaged to replace the conventional electrical wiring of an automotive vehicle by a serial data transmission bus interconnecting electronic modules for controlling actuators or for acquiring signals received from sensors. The standardising of such an assembly of means forms the subject of a working document referenced ISO/TC22/SC3/WG1 N398E published in June 1989 by the International Standardization Organization (ISO) and entitled "Draft proposal for recommended practice: VAN remote controlled switch".

Various electronic modules forming part of such an assembly may have the same operating standards. This is for example the case of the modules for acquiring signals delivered by a temperature sensor, which may be perfectly identical from the operational point of view, whether the temperature sensed is that of the air, the cooling water, the engine oil etc. The same is also true of modules for controlling the right and left light units, for example.

It is however necessary to personalise each module in such a way that the latter can recognise, out of all the signals conveyed by the bus, those which are intended specifically for it. Following the working document referenced ISO/TC22/SC3/WG1 N406E published in November 1989 by the abovementioned body and entitled "Draft standard VAN", the signals applied to the communication bus show up in the form of frames comprising, in particular, a "frame-identifier" field used to designate the "subject" transmitted in the frame or the module interrogated, a "control" field which specifies the frame type transmitted, and a field containing the data to be transmitted.

The identifier serves to indicate to a particular module whether the data contained in the frame are intended for it. It is then necessary to personalise the module by loading into a memory zone of the latter a predetermined identifier which is tied to it so that this module may subsequently recognise, on the communication bus, the signal frames which it should take account of, by comparing the stored identifier with that appearing at the front of a signal frame.

Such systems comprising a plurality of modules interconnected on a communication bus are already disclosed in documents JP-A-61 160107 and EP-A-333057. But neither of these documents describes a method for personalising each module, as JP-A-61 160107 relates to a method for selecting a specific module and EP-A-333057 indicates how to send to a specific machine (for example : a printer) all the data it needs to operate.

Following a first known method of personalising the module, the identifier is loaded by specialised input pins provided on an integrated circuit which ensures the decoding of the information received by way of the communication bus. This method exhibits two major disadvantages. Firstly, the personalising has to be carried out relatively early in the production chain of the module, at the site of the manufacturer of this module. It follows from this that two modules, perfectly identical from an operational point of view, will have to be differently referenced, this complicating the management of the stocks of these modules, as regards both manufacture and after-sales service.

The other disadvantage arises because additional pins have to be provided for loading the identifier, whilst it is far from possible to consider the cost of these pins as being negligible in large-volume manufacturing operations which must be as inexpensive as possible, as is the case in particular in automotive electronics.

This disadvantage can be eliminated by remotely loading the identifier into a memory internal to the integrated circuit, during the manufacture of the module. This procedure however leaves remaining the disadvantage according to which a personalising during manufacture complicates the management of the stocks of modules.

The loading of the identifier could even be carried out by configuring the module in programming-functioning mode, by application of a particular sequence of stimuli to pins of a connector provided in this module. For reasons of security, it is however necessary that this sequence is not able to be reapplied to the module during normal functioning thereof. This solution exhibits the disadvantage of being relatively complicated to implement, in particular through the particular constraints which it imposes on the input/output pins of the module.

The aim of the present invention is therefore to furnish a method of personalising an electronic module which is simple, inexpensive and which allows later personalising of the module, in such a way as to simplify the management of the stocks of the non-personalised modules, until the time when the latter are physically installed in the in-service position.

The aim of the present invention is also to furnish such a method which allows the simultaneous loading of the identifier of the module and of other data for configuring this module, such as data ensuring "impaired" mode functioning of the items of equipment controlled by the module. Such an impaired mode functioning is automatically substituted for the normal functioning in the case of an anomaly on the communication bus. In an automotive vehicle for example this impaired functioning ensures the maintenance of minimal operating standards, suitable however to ensure the safety of the driver.

The aim of the present invention is further to furnish such a method which allows the execution of operations for testing the functioning of the electronic module, even though the latter has not yet been personalised.

These aims of the invention, as well as others which will emerge in the remainder of the present description, are achieved with a method of personalising an electronic module comprising a gateway to a communication bus suitable for receiving digital signal frames comprising, in particular, a frame-identifier field and a data field, an identifier discriminator being provided in the module in order to authorise the acquisition by the module of the data contained in frames comprising a predetermined identifier, this discriminator comprising a memory zone assigned to the predetermined identifier associated with the module. Following the invention, a signal frame, the data field of which contains the predetermined identifier, and the identifier field of which contains an image of the initial state of the memory zone constituting a "lost" identifier, is initially applied to the gateway of the module to the communication bus, in such a way that the identity then established by the discriminator between the initial content of this zone and the identifier field of the frame, authorises the loading into the said memory zone of the predetermined identifier inscribed in the data field of the frame.

By thus personalising the module with the aid of signals applied directly to the latter, it is then possible to perform this personalising immediately before mounting the module in the in-service position, on an automotive vehicle for example. The management of the non-personalised modules is much simplified thereby because the number of non-personalised modules to be referenced in stock is much smaller than if these modules were personalised.

It is furthermore observed that the method according to the invention is economical because the personalising of the module does not require the presence on the latter of any connection pin specific to this personalising.

Following an optional feature of the method according to the invention, the module is loaded with data for configuring this module during the step of loading the module with the predetermined identifier which is associated with it. It is thus possible simply to load into the module data for regulating the impaired-mode functioning of an item of equipment controlled by the module.

Following another optional feature of the method according to the invention, applicable when the digital signal frames transmitted by the communication bus further comprise n predetermined bits, at least one of the 2ⁿ possible combinations of logic states of which is unused after loading of the predetermined identifier, the combination of logic states of these predetermined bits which is present in a frame is compared with the combination unused after loading of the predetermined identifier, and the loading of the predetermined identifier is authorised only when the compared combinations are identical.

The personalising of the module is then temporarily impossible and other operations can be executed on the non-personalised module, such as operations for testing the functioning of the module.

The invention also furnishes an electronic circuit for the implementation of the method according to the invention, this circuit comprising means of processing digital signals received by an electronic module in to which this circuit is incorporated and which comprises means of connection to the communication bus and means of transmitting and/or receiving signals on a port connected to a peripheral unit. Following the invention, the circuit comprises an identifier discriminator sensitive to a frame containing the "lost" identifier in order to control the loading of the predetermined identifier and of possible configuration data contained in a data field of the frame, into memory means provided in the circuit, and sensitive to a frame containing the predetermined identifier in order to control, in normal functioning, the processing of data contained in a data field of the frame.

Following an embodiment of an electronic module according to the invention comprising the circuit defined above, the means of connection to the communication bus can be disconnected from the bus and connected to means provided to ensure the loading of the predetermined identifier and of the possible configuration data into the memory means.

Following a variant, the loading of the predetermined identifier and of the possible configuration data can be carried out during the first connection of the module to the communication bus, under the control of a central information-processing unit interconnected with the module by the communication bus and with other modules of the same type interconnected among themselves by this bus.

Other features and advantages of the present invention will emerge on reading the description which follows and examining the attached drawing in which:
- Figure 1 is a diagram of an electronic module following the invention,
- Figure 2 represents a format of digital signal frames transmitted over the communication bus of an assembly of electronic modules according to the invention, interconnected by this bus, and
- Figure 3 is a decision chart useful in the description of the method of personalising these modules, following the present invention.

By way of non-limiting example, the invention will be described in its application to the personalising of electronic modules placed on board an automotive vehicle and interconnected by a multiplex data transmission bus constituting a local network. Still by way of example, in this regard reference will be made to the local network for an automotive vehicle, described in the abovementioned working documents originating from the ISO, in which this local network is designated by the initials VAN (Vehicle Area Network).

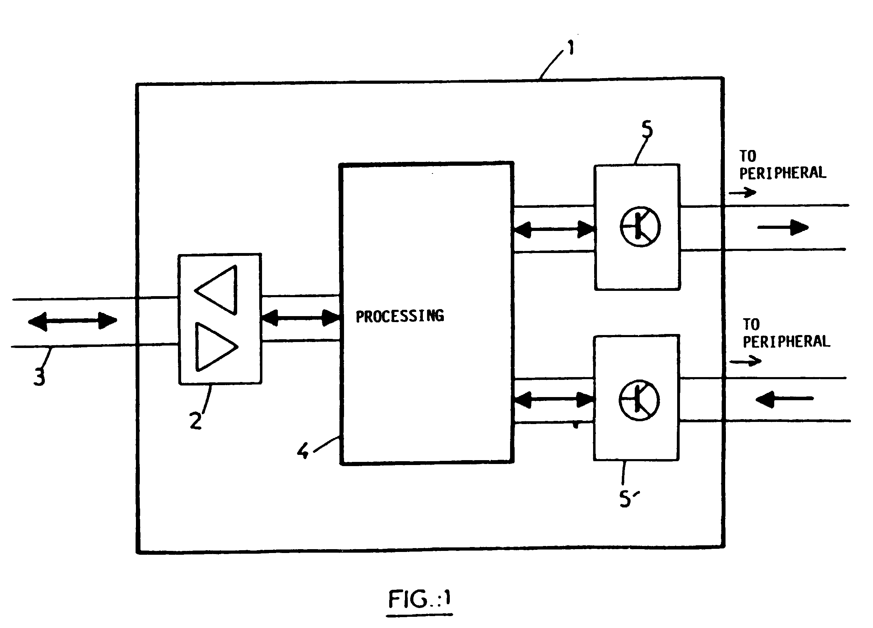

In Figure 1 it is seen that the module 1 following the invention comprises a physical means 2 of managing a communication bus 3 (commonly called the line "driver"), information-processing means 4 taking the form of an electronic circuit improved through the present invention, and means 5, 5' for managing peripheral units.

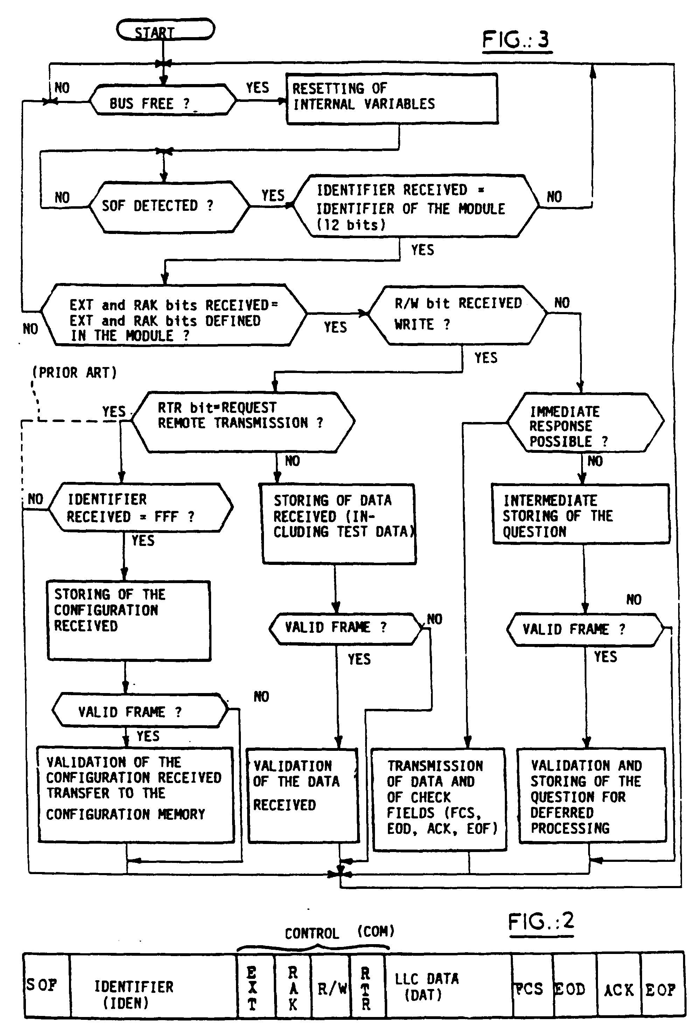

Referring now to Figure 2 in which there has been represented a format of digital signal frames transmitted over the communication bus of a VAN network. To supplement the following description of the structure of these frames, reference can be made to the abovementioned document ISO/TC22/SC3/WG1 N406E, where these frames are described in detail.

As has been seen above, the frames form the subject of a series transmission over the communication bus. They are constituted from several successive fields diagrammatically represented in Figure 2 in the form of adjacent blocks. A frame thus contains, firstly, a start of frame delimiter field SOF for marking the start of a frame, and an "identifier" field IDEN used to specify the subject transmitted in the frame or the subject interrogated. The field makes it possible to identify which module or modules the frame is intended for. This identifier is constituted by an arbitrary sequence of binary elements. The sequence can be individual to a particular module or, by contrast, shared by several modules, if the nature of the information contained in the frame is such that the latter has to reach several modules at once. The frame continues through a control field with four bits referenced EXT, RAK, R/W and RTR respectively. This field is thus constituted from an extension bit (EXT) reserved for a potential usage, a "request acknowledgement" bit (RAK) which determines whether or not a transmitting module is requesting a receiving module to acknowledge to it receipt of a correctly received frame, a read/write bit (R/W) which indicates whether the frame transmitted is a request for reading or writing, and a request direct transmission bit (RTR). If the value of this bit is zero, the transmitted frame contains data, whereas if the value of the bit is 1, this value is interpreted by a receiving module as an invitation to transmit.

A data field (DAT) follows the control field. It comprises an integer number of bytes. A signal frame therefore- serves essentially to transmit the data contained in the data field to modules clearly determined by the identifier placed at the front of the frame. The frame is supplemented by various accessory fields. The latter comprise a "frame check sequence" field (FCS), used to guarantee the integrity of the transmitted frames, a "data delimiter" field (EOD) which marks the end of the field transmitted by the transmitter, an "acknowledge receipt" field (ACK) and an "end of frame delimiter" field (EOF).

Referring now to Figure 3 of the attached drawing in order to describe the method of personalising an electronic module following the invention, it being understood that this module is intended to form part of an assembly of such modules which are designed to exchange digital signal frames formatted as described above. As has been seen above, this personalising consists in placing in memory, in the module, at least one specific identifier and, possibly, configuration data such as data for regulating an "impaired" functioning of an item of equipment controlled by this module, for example.

The decision chart of Figure 3 illustrates the method following the invention, which can be executed with the aid of a hardwired logic network contained in an integrated circuit, the basic functions of which are described in the abovementioned ISO working documents. This circuit is intended to be incorporated into an electronic module.

A memory zone is provided in such a circuit in order to receive the identifier and, possibly, the configuration data. Before personalising, the zone reserved for the identifier is virgin, all the bits being at 1. Twelve bits are reserved for the identifier and this zone therefore initially contains a "lost" identifier, expressed in hexadecimal code by FFF. This identifier is referred to as "lost" since, as will be appreciated below, it cannot be reused once the personalising of the module is effected. All the non-personalised modules placed on board the automotive vehicle initially comprise in memory, in the zone reserved for their final identifier, the same initial "lost" identifier, namely FFF.

Following the method according to the invention, the personalising of a particular module is achieved with the aid of a signal frame formatted as described above and comprising, in its identification field, the lost identifier FFF. It is appreciated that, if this frame is transmitted over the bus, whilst all the non-personalised modules are interconnected by the communication bus, all the modules recognise the frame because of the identity of this identifier with the one then contained in their memory zones assigned to the identification. Such an overall recognition does not permit a specific identifier to be entered into a chosen module.

Therefore, following the invention, the "personalising" frame is applied to means of connection or gateway of a particular module to the communication bus, whilst this module is itself disconnected from this communication bus.

In a line for mounting the module onto a vehicle equipped with the communication bus, the loading of a particular module with a specific identifier, and possibly with configuration data, is then achieved by connecting this module through its gateways to the communication bus and whilst it is disconnected from the latter, to an electronic loading "utility" present at the side of the mounting line, a utility which applies to the module a signal frame specific to the module and containing the data necessary for the loading of a predetermined identifier and, possibly, of configuration data particular to this module.

Following another possible implementation of the present invention, a module is loaded with the corresponding "personalising" frame, whilst this module is the lone non-personalised module connected to the communication bus, the frame in question being transmitted over the bus by a central data processing unit intended,-after successive installation and personalising of all the modules, to be interconnected with all these modules, by this bus.

Thus, coming back to the decision chart of Figure 3, after a "bus free ?" test, resetting of the internal variables and detection of a start of frame delimiter field SOF, the comparison is made of the frame identifier which follows the SOF delimiter (bit by bit serial transmission) with the one currently in memory in the module. It is assumed that no predetermined identifier has then yet been loaded into the module and it is therefore the lost identifier "FFF" which can be read into memory.

As has been seen above, following the invention, a personalising frame transmitted over the bus by the central unit (or by a loading utility connected to the gateways of the module to this bus) comprises the identifier FFF in its identification field. The test is then positive and another test is sequenced to the latter relating to the bits EXT and RAK of the control field COM of the frame transmitted. In the test, these bits are compared with their values placed in memory in the module. In the event of non-identity, the current frame is relinquished, since it is judged to be invalid (cf. the protocol described in the abovementioned ISO documents). If there is identity, the next test relates to the write/read bit R/W in order to establish whether or not it is "write"-positioned.

In a module personalising frame of the method according to the invention, this bit is "write"-positioned. The next test relates to the last bit of the control field COM, namely the "request remote transmission" or "data transmission" bit RTR. In a personalising frame, this bit is positioned at "data transmission" for a reason which will be explained further on. A discriminator is installed in the module in order to distinguish this state combination of the R/W and RTR bits.

Referring to the decision chart of Figure 3, it is seen that the combination:
R/W bit in write mode,
RTR bit in "request remote transmission" mode leads to an "identifier received = FFF ?" test which, if it is positive, permits the storing of the identifier and of the possible configuration data contained in the personalising frame, in intermediate memories such as shift registers provided in the circuit.

After a test of validity of the frame received, performed with the aid of the "frame check sequence" field (FCS) containing a cyclic redundancy code used to guarantee the integrity of the frames transmitted, there is a validation of the identifier and of the configuration which are received and transfer of these data into the memory zones of the module which are provided to this effect. In this way, the definitive predetermined identifier associated with the module "overwrites" the identifier FFF which could previously be read from a particular memory zone of an identifier discriminator used in the test for comparing the identifier contained in a frame, with the identifier contained in this memory zone. Similarly, the data for configuring the module are written into another memory zone provided to this effect in the circuit, in order to be used later in the event of the module passing to "impaired" functioning, for example.

It will be observed that only the bit combination:
R/W in write mode,
RTR in "request remote transmission" mode, permits, according to an important feature of the present invention, a possible subseqent personalising of the module. This is in fact the only state combination of these bits which has no significance during the normal functioning of the module and which, consequently, there is no risk of encountering during this normal functioning. In fact, a frame comprising a write-positioned R/W bit is incompatible with a "request remote transmission"-positioned RTR bit, in normal functioning. This results from the fact that the write positioning of the R/W bit is associated with a writing to a receiving module of a datum coming from a transmitting module, whilst a "request remote transmission" positioning of the RTR bit is interpreted by a receiving module as an invitation to transmit. These two positions are therefore mutually contradictory, as regards the sense in which the data transfer is performed, and cannot, in normal functioning, be encountered in a same frame.

Advantage is drawn from this observation, in order to build into the personalising method following the invention, an additional dichotomy before the recognition of the FFF identifier. Thus, if the R/W and RTR bits are not positioned in such a way as to allow the "identifier received = FFF ?" test, the data contained in the received frame are stored in registers before being possibly validated. This is true in the normal functioning of the module, but also before execution of the personalising procedure. Data can thus be entered into a module, in the absence of this personalising. This allows in particular the execution of tests on the module itself, to verify the proper functioning thereof, tests which it is proper to perform on the modules as early as possible, before personalising and installation in the vehicle, so as to quickly eliminate defective modules.

Of course, if an early procedure for testing the module is not necessary, it is possible, in the method following the invention, to omit the tests on the R/W and RTR bits and pass directly to the other essential test of this method, namely the "identifier received = FFF ?" test before the validation and the recording of an identifier and of configuration data contained in a received frame.

Having thus described the method of personalising an electronic module following the invention, which is executed during the installing of this module into a multiplex transmission network such as that described in the preamble of the present description, it is expedient to verify that the thus personalised module is capable of functioning normally within an assembly of such modules. For this-purpose, the decision chart of Figure 3 is returned to while assuming that a signal frame formatted as indicated above is transmitted over the bus, then free, and that this frame comprises, in its identification field, a predetermined identifier which occupies at least one of the modules of the network.

It should be noted in this regard that if the nature of the information to be transmitted is such that several modules are addressees thereof, these modules will have previously been "personalised" with a same identifier so that this multiple transmission is possible.

In the simplest case, the information to be transmitted has only a single addressee. In this case, a single module is personalised to this effect and the transmitted frame is received only by this module.

After the test on the start of frame field SOF, the discriminators of the modules execute the "identifier received = identifier of the module ?" test. For simplicity, it is assumed that this test is positive in a single module only. The other modules then no longer react to the frame. Only the module identified as the frame then executes the routine tests on the EXT and RAK bits before testing the R/W bit. If the latter is write-positioned, the module transmitting the frame requests another (receiving) module to transmit data to it. According to a procedure explained in the abovementioned ISO working document, referenced ISO/TC22/SC3/WG1 N406 E, a test aiming to advise the transmitting module if the receiving module can respond immediately, is performed. If such is the case, the latter immediately transmits the response over the bus with a data field and suitable check fields (FCS, EOD, ACK, EOF), otherwise there is intermediate storing of the question posed by the transmitting module, possible validation of the question and storing of the question for deferred processing.

If the test performed on the R/W bit has revealed a write positioning of this bit, the RTR bit should logically, in normal functioning, be "data transmission"-positioned, this avoiding any confusion with the other alternative (request remote transmission) used only in the phase of personalising a module. There is then storing of the data received from the frame, possible validation of the latter and finally validation of the data received.

It is thus observed that the test performed on the R/W and RTR bits and the selection carried out on them in the personalising phase, does not in any way disturb the normal functioning of the module. It is furthermore recalled that, following the invention, the identifier FFF used in the personalising phase is not reused after execution of the latter, so as to prevent any confusion.

The module normally comprises means of connection to the data bus, which can possibly be disconnected, means of transmitting 5,5' and/or of receiving signals on at least one output port connected to a peripheral unit (an actuator for example), and an electronic circuit 4 comprising means for processing frames of digital signals received by way of the means of connection.

The implementation of the personalising method following the invention entails the presence in the circuit 4 of the following additional means:
- an identifier discriminator,
- a discriminator acting on the R/W and RTR bits,
- additional shift registers for intermediate storings of configuration data, and
- memory zones for the definitive storing of the configuration.

By contrast, the method following the invention makes it possible to do without external configuration means, that is to say without specialised configuration pins, although it is expedient to reduce as much as possible the number of pins for reasons of costs.

Of course, the invention is not limited to the embodiment described and represented, which has been given merely by way of example. Thus, the personalising method following the invention could be implemented in modules interconnected in a multiplex network other than the VAN network described in the abovementioned working documents, with differently structured signal frames but comprising however an address or identification field. Similarly, the execution of tests on the module, prior to the personalising, could be allowed through discriminations performed on more than two bits, if the frame more generally contains n bits, at least one of the 2ⁿ combinations of states of which is not encountered in normal functioning. Furthermore, the personalising method described above could also be implemented in order to personalise a module to be installed in place of a defective module.

## Claims

1. Method of personalising an electronic module comprising a gateway to a communication bus adapted for receiving digital signal frames comprising, at least a frame-identifier field and a data field, an identifier discriminator being provided in the module in order to authorise the acquisition by the module of the data contained in frames comprising a predetermined identifier, this discriminator comprising a memory zone assigned to the predetermined identifier associated with the module, characterised in that a signal frame, the data field of which contains the predetermined identifier, and the identifier field of which contains an image of the initial state of the memory zone, is initially applied to the gateway of the module to the communication bus, in such a way that when the initial content of the memory zone is identical to the identifier field of the frame, the data field of the signal frame is loaded in the identifier field of the module and erases the initial content of the memory zone.

2. Method according to Claim 1, characterised in that the initial state of the memory zone corresponds to a lost identifier, which is not reused after loading of the predetermined identifier.

3. Method according to Claim 1, characterised in that the lost identifier is the hexadecimal identifier FFF.

4. Method according to Claim 1, in which the digital signal frames transmitted by the communication bus further comprise n predetermined bits, at least one of the 2ⁿ possible combinations of logic states of which is unused after loading of the predetermined identifier, characterised in that the combination of logic states of these predetermined bits which is present in a frame is compared with the combination unused after loading of the predetermined identifier, and the loading of the predetermined identifier is authorised only when the compared combinations are identical.

5. Method according to Claim 4, characterised in that the unused combination is constituted by the write positioning of a bit (R/W) of the frame, representing a request for reading or writing a datum, and by the remote transmission request positioning of another bit (RTR) of the frame.

6. Method according to Claim 1, applied to the loading of a predetermined identifier into an electronic module intended to form part of an assembly of such modules placed on board an automotive vehicle and interconnected by the communication bus for the acquisition of information and/or the control of associated items of equipment, characterised in that each module is individually and successively loaded with the aid of a loading utility available by the side of a line for mounting these modules into the vehicle.

7. Method according to Claim 1, applied to the loading of a predetermined identifier into an electronic module forming part of an assembly of such modules placed on board an automotive vehicle and interconnected among themselves and with a central information-processing unit by the communication bus, for the acquisition of information and/or the control of associated items of equipment, characterised in that each of the modules is connected successively to the bus and the predetermined identifier is loaded into the lone non personalised module then connected to the bus, under the control of a program installed in the central unit.

8. Method according to Claim 1, characterised in that the module is loaded with data for configuring this module during the step of loading the module with the predetermined identifier.

9. Method according to Claim 8, characterised in that the configuration data comprise data for regulating the impaired-mode functioning of an item of equipment controlled by the module.

10. Electronic circuit for implementing the method according to Claim 2, comprising means of processing digital signal frames received by an electronic module (1) into which it is incorporated, and which comprises means of connection to the communication bus and means (5, 5') for managing signals on a port connected to a peripheral unit, this circuit being characterised in that it comprises :
- an identifier discriminator sensitive to a signal frame containing the lost identifier in its identifier field and at least a predetermined identifier in its data field,
- means to compare the lost identifier contained in the identifier field of the signal frame, with the initial state of the memory zone of the module,
- means for loading the predetermined identifier into the memory zone, when the lost identifier contained in the identifier field of the signal frame is identical to the initial state of the memory zone of the module, said means for loading being adapted to erase the initial state of the memory zone when loading the predetermined identifier.

11. Electronic circuit according to Claim 10, characterised in that it comprises means for distinguishing a particular combination of n predetermined bits of the frame unused in normal functioning, apart from the identifier field of the frame, and for authorising the functioning of the identifier discriminator only if this particular combination is present in the frame.

12. Electronic circuit according to Claim 11, characterised in that it comprises means for receiving and executing commands for testing the functioning of the module into which it is incorporated, prior to the loading of the predetermined identifier and of possible configuration data.

13. Electronic circuit according to anyone of Claim 10 to 12, characterised in that it comprises means of connection to a communication bus (3), means of transmitting and/or receiving (5, 5') signals on at least one output port connected to a peripheral unit, and an electronic circuit comprising means of processing frames of digital signal received by way of the means of connection.

14. Electronic circuit according to Claim 13, characterised in that the means of connection to the communication bus can be disconnected from the bus and connected to means provided to ensure the loading of the predetermined identifier and possible configuration data into the memory means of the circuit.

15. Electronic circuit according to Claim 13, characterised in that it comprises means for loading the predetermined identifier and possible configuration data into the memory means of the circuit, under the control of a central information-processing unit interconnected with the module by the communication bus.

## Patentansprüche

1. Verfahren zum Personifizieren eines elektronischen Moduls mit einem Gateway zu einem Verbindungsbus zum Empfangen von digitalen Signalrahmen mit mindestens einem Rahmenidentifizierungsfeld und einem Datenfeld, mit einem Identifizierungsdiskriminator im Modul, um die Annahme im Modul der in den Rahmen mit einer vorbestimmten Identifizierung enthaltenden Daten zu autorisieren, wobei der Diskriminator eine Speicherzone aufweist, die der vorbestimmten, zu dem Modul gehörenden Identifizierung zugeordnet ist, dadurch gekennzeichnet, daß ein Signalrahmen, dessen Datenfeld die vorbestimmte Identifizierung enthält und dessen Identifizierungsfeld ein Bild des Anfangszustandes der Speicherzone enthält, anfänglich dem Gateway des Moduls zum Verbindungsbus zugeführt wird, derart, daß das Datenfeld des Signalrahmens in das Identifizierungsfeld des Moduls eingespeichert wird und den anfänglichen Inhalt der Speicherzone löscht, wenn der anfängliche Inhalt der Speicherzone identisch mit dem Identifizierungsfeld des Rahmens ist.

2. Verfahren nach Anspruch 1, dadurch gekennzeichnet, daß der anfängliche Zustand der Speicherzone einer verlorenen Identifizierung entspricht, die nach dem Einspeichern der vorbestimmten Identifizierung nicht wieder benutzt wird.

3. Verfahren nach Anspruch 1, dadurch gekennzeichnet, daß die verlorene Identifizierung die hexadezimale Identifizierung FFF ist.

4. Verfahren nach Anspruch 1, bei dem die über den Verbindungsbus übertragenen digitalen Signalrahmen ferner n vorbestimmte Bits aufweisen, mindestens eine von 2ⁿ möglichen Kombinationen von logischen Zuständen, die nach dem Einspeichern der vorbestimmten Identifizierung unbenutzt bleiben, dadurch gekennzeichnet, daß die Kombination der logischen Zustände dieser vorbestimmten Bits, die in einem Rahmen vorhanden sind, mit der nach dem Einspeichern der vorbestimmten Identifizierung nicht benutzten Kombination verglichen wird und das Einspeichern der vorbestimmten Identifizierung nur dann autorisiert wird, wenn die verglichenen Kombinationen identisch sind.

5. Verfahren nach Anspruch 4, dadurch gekennzeichnet, daß die nicht benutzte Kombination aus der Schreibstellung eines Bits (R/W) des Rahmens, die eine Anforderung nach Lesen oder Schreiben einer Angabe repräsentiert, und aus der Stellung eines weiteren Bits (RTR) des Rahmens für eine Fernübertragungsanforderung zusammengesetzt ist.

6. Verfahren nach Anspruch 1, in Anwendung auf das Einspeichern einer vorbestimmten Identifizierung in ein elektronisches Modul, das Teil einer Reihe solcher Module ist, die in einem Fahrzeug eingebaut und über den Verbindungsbus zum Empfangen von Informationen und/oder zur Steuerung zugehöriger Ausrüstungseinheiten angeschlossen sind, dadurch gekennzeichnet, daß jedes Modul individuell und nacheinander mit Hilfe eines Speichergerätes geladen wird, das auf Seiten des Einbaues dieser Module in das Fahrzeug verfügbar ist.

7. Verfahren nach Anspruch 1 in Anwendung auf das Einspeichern einer vorbestimmten Identifizierung in ein elektronisches Modul, das Teil einer Reihe solcher Module bildet, die in einem Kraftfahrzeug eingebaut sind und untereinander und mit einer zentralen informationsverarbeitenden Einheit über den Verbindungsbus verbunden sind, zum Empfang von Informationen und/oder der Steuerung zugehöriger Ausrüstungseinheiten, dadurch gekennzeichnet, daß jedes Modul nacheinander an den Bus angeschlossen wird und die vorbestimmte Identifizierung nur in das an den Bus angeschlossene nicht personifizierte Modul eingespeichert wird, unter der Kontrolle eines in der zentralen Einheit eininstallierten Programms.

8. Verfahren nach Anspruch 1, dadurch gekennzeichnet, daß das Modul mit Daten zum Konfigurieren des Moduls beim Einspeichern der vorbestimmten Identifizierung in das Modul geladen wird.

9. Verfahren nach Anspruch 8, dadurch gekennzeichnet, daß die Konfigurationsdaten Daten zum Ausführen einer verschlechterten Modus funktion einer von dem Modul angesteuerten Ausrüstungseinheit aufweisen.

10. Elektronische Schaltung zum Durchführen des Verfahrens nach Anspruch 2, mit Mitteln zum Verarbeiten von digitalen Signalrahmen, die von einem elektronischen Modul (1) empfangen werden, in dem die Mittel eingebaut sind, und mit Mitteln zum Anschluß an den Verbindungsbus und Mitteln (5, 5') für Signale an einem an eine periphere Einheit angeschlossenen Anschluß, wobei die Schaltung dadurch gekennzeichnet ist, daß sie aufweist: Einen Identifizierungsdiskriminator, der auf einen Signalrahmen anspricht, der die verlorene Identifizierung in seinem Identifizierungsfeld und mindestens eine vorbestimmte Identifizierung in seinem Datenfeld enthält, Mittel zum Vergleichen der in dem Identifizierungsfeld des Signalrahmens enthaltenen verlorenen Identifizierung mit dem Anfangszustand der Speicherzone des Moduls, Mittel zum Speichern der vorbestimmten Identifizierung in die Speicherzone, wenn die im Identifizierungsfeld des Signalrahmens enthaltene verlorene Identifizierung identisch mit dem Anfangszustand der Speicherzone des Moduls ist, wobei die Mittel zum Einspeichern in der Lage sind, den Anfangszustand der Speicherzone zu löschen, wenn die vorbestimmte Identifizierung eingespeichert wird.

11. Elektronische Schaltung nach Anspruch 10, dadurch gekennzeichnet, daß sie Mittel aufweist, die eine bestimmte Kombination von n vorbestimmten Bits des bei normaler Funktion nicht benutzten Rahmens von dem Identifizierungsfeld des Rahmens unterscheiden und die das Funktionieren des Identifizierungsdiskriminators nur dann autorisieren, wenn diese besondere Kombination im Rahmen vorhanden ist.

12. Elektronische Schaltung nach Anspruch 11, dadurch gekennzeichnet, daß sie Mittel zum Empfang und zum Ausführen von Befehlen zum Testen der Funktion des Moduls, in dem sie eingebaut sind, aufweist, bevor die vorbestimmte Identifizierung und gegebenenfalls Konfigurationsdaten eingespeichert werden.

13. Elektronische Schaltung nach einem der Ansprüche 10 bis 12, dadurch gekennzeichnet, daß sie Mittel zum Anschluß an einen Verbindungsbus (3), Mittel zum Übertragen und/oder Empfangen (5,5') von Signalen an mindestens einem Ausgangsanschluß, der an eine periphäre Einheit angeschlossen ist und eine elektronische Schaltung aufweist, mit Mitteln zum Verarbeiten von Rahmen digitaler Signale, die über die Verbindungsmittel empfangen werden.

14. Elektronische Schaltung nach Anspruch 13, dadurch gekennzeichnet, daß die Mittel zum Anschluß an den Verbindungsbus vom Bus abgetrennt werden können und an Mittel angeschlossen werden, die vorgesehen sind, um das Einspeichern der vorbestimmten Identifizierung und gegebenenfalls von Konfigurationsdaten in die Speichermittel der Schaltung durchzuführen.

15. Elektronische Schaltung nach Anspruch 13, dadurch gekennzeichnet, daß Mittel zum Einspeichern der vorbestimmten Identifizierung und gegebenenfalls von Konfigurationsdaten in die Speichermittel der Schaltung unter der Kontrolle einer zentralen informationsverarbeitenden Einheit, die mit dem Modul über den Verbindungsbus verbunden ist, vorhanden sind.

## Revendications

1. Procédé de personnalisation d'un module électronique comprenant un accès à un bus de communication propre à recevoir des trames de signaux numériques comportant au moins un champ identificateur de trame et un champ de données, un discriminateur d'identificateur étant prévu dans le module pour autoriser l'acquisition par le module des données contenues dans des trames comportant un identificateur prédéterminé, ce discriminateur comportant une zone de mémoire assignée à l'identificateur prédéterminé associé au module, caractérisé en ce qu'on applique initialement à l'accès du module au bus de communication une trame de signaux dont le champ de données contient l'identificateur prédéterminé et dont le champ identificateur contient une image de l'état initial de la zone de mémoire, de manière que lorsque le contenu initial de la zone de mémoire est identique au champ identificateur de la trame, le champ de données de la trame de signaux est chargé dans le champ identificateur du module et efface le contenu initial de la zone de mémoire.

2. Procédé conforme à la revendication 1, caractérisé en ce que l'état initial de la zone de mémoire correspond à un identificateur perdu, non réutilisé après chargement de l'identificateur prédéterminé.

3. Procédé conforme à la revendication 1, caractérisé en ce que l'identificateur perdu est l'identificateur hexadécimal FFF.

4. Procédé conforme à la revendication 1, dans lequel les trames de signaux numériques transmises par le bus de communication comprennent en outre n bits prédéterminés dont au moins une des 2ⁿ combinaisons possibles d'états logiques est inutilisée après chargement de l'identificateur prédéterminé, caractérisé en ce qu'on compare la combinaison d'états logiques de ces bits prédéterminés présente dans une trame à la combinaison inutilisée après chargement de l'identificateur prédéterminé et on autorise le chargement de l'identificateur prédéterminé seulement lorsque les combinaisons comparées sont identiques.

5. Procédé conforme à la revendication 4, caractérisé en ce que la combinaison inutilisée est constituée par le positionnement en écriture d'un bit (R/W) de la trame, représentatif d'une demande de lecture ou d'écriture d'une donnée et par le positionnement en demande de transmission distante d'un autre bit (RTR) de la trame.

6. Procédé conforme à la revendication 1, appliqué au chargement d'un identificateur prédéterminé dans un module électronique destiné à faire partie d'un ensemble de tels modules embarqués dans un véhicule automobile et interconnectés par le bus de communication pour l'acquisition d'informations et/ou la commande d'équipements associés, caractérisé en ce qu'on charge individuellement et successivement chaque module à l'aide d'un outil de chargement disponible au bord d'une chaîne de montage de ces modules dans le véhicule.

7. Procédé conforme à la revendication 1, appliqué au chargement d'un identificateur prédéterminé dans un module électronique formant partie d'un ensemble de tels modules embarqués dans un véhicule automobile et interconnectés entre eux et avec une unité centrale de traitement d'informations par le bus de communication, pour l'acquisition d'informations et/ou la commande d'équipements associés, caractérisé en ce qu'on connecte successivement chacun des modules au bus et on charge l'identificateur prédéterminé dans le seul module non personnalisé alors connecté au bus, sous la commande d'un programme installé dans l'unité centrale.

8. Procédé conforme à la revendication 1, caractérisé en ce qu'on charge le module avec des données de configuration de ce module lors de l'étape de chargement du module avec l'identificateur prédéterminé.

9. Procédé conforme à la revendication 8, caractérisé en ce que les données de configuration comprennent des données de réglage du fonctionnement en mode dégradé d'un équipement commandé par le module.

10. Circuit électronique pour la mise en oeuvre du procédé conforme à la revendication 2, comprenant des moyens de traitement de trames de signaux numériques reçues par un module électronique (1) auquel il est incorporé et qui comprend des moyens de connexion au bus de communication et des moyens de gestion (5, 5') de signaux sur un port connecté à un organe périphérique, ce circuit étant caractérisé en ce qu'il comprend :
- un discriminateur d'identificateur sensible à une trame contenant l'identificateur perdu pour commander dans son champ identificateur et au moins un identificateur prédéterminé dans son champ de données,
- des moyens pour comparer l'identificateur perdu contenu dans le champ identificateur de la trame de signaux avec l'état initial de la zone de mémoire du module,
- des moyens pour charger l'identificateur prédéterminé dans la zone de mémoire, lorsque l'identificateur perdu contenu dans le champ identificateur de la trame à signaux est identique à l'état initial de la zone de mémoire du module, lesdits moyens de chargement étant adaptés pour effacer l'état intial de la zone de mémoire lors du chargement de l'identificateur prédéterminé.

11. Circuit électronique conforme à la revendication 10, caractérisé en ce qu'il comprend des moyens pour distinguer une combinaison particulière de n bits prédéterminés de la trame inutilisée en fonctionnement normal, hors du champ identificateur de la trame, et pour n'autoriser le fonctionnement du discriminateur d'identificateur que si cette combinaison particulière est présente dans la trame.

12. Circuit électronique conforme à la revendication 11, caractérisé en ce qu'il comprend des moyens pour recevoir et exécuter des commandes de test de fonctionnement du module auquel il est incorporé, antérieurement au chargement de l'identificateur prédéterminé et de données de configurations éventuelles.

13. Circuit électronique conforme à l'une quelconque des revendications 10 à 12, caractérisé en ce qu'il comprend des moyens de connexion à un bus de communication (3), des moyens d'émission et/ou de réception (5, 5') de signaux sur au moins un port de sortie connecté à un organe périphérique et un circuit électronique comprenant des moyens de traitement de trames de signaux numériques reçus par l'intermédiaire des moyens de connexion.

14. Circuit électronique conforme à la revendication 13, caractérisé en ce que les moyens de connexion au bus de communication sont déconnectables du bus et connectables à des moyens prévus pour assurer le chargement de l'identificateur prédéterminé et des données de configurations éventuelles dans les moyens de mémoire du circuit.

15. Circuit électronique conforme à la revendication 13, caractérisé en ce qu'il comprend des moyens pour charger l'identificateur prédéterminé et les données de configuration éventuelles dans les moyens de mémoire du circuit, sous la commande d'une unité centrale de traitement d'informations interconnectée par le bus de communication avec le module.
